# EUROPEAN PATENT SPECIFICATION

(11) **EP 3 413 529 B1**
(45) Date of publication and mention of the grant of the patent: **14.04.2021**
(21) Application number: 16890995.0
(22) Date of filing: 24.02.2016
(51) Int. Cl.: H04L 29/06, G06F 21/00

(54) **DATA SECURITY PROTECTION METHOD AND APPARATUS**
VERFAHREN UND VORRICHTUNG FÜR DATENSICHERHEITSSCHUTZ
PROCÉDÉ ET APPAREIL DE PROTECTION DE LA SÉCURITÉ DE DONNÉES

(43) Date of publication of application: 12.12.2018
(73) Proprietor: Huawei Technologies Co., Ltd., Longgang District Shenzhen, Guangdong 518129 (CN)
(72) Inventor: WEI, Xinpeng, Shenzhen Guangdong 518129 (CN)
(74) Representative: Isarpatent
(86) International application number: PCT/CN2016/074482
(87) International publication number: WO 2017/143541

(56) References cited:
- CN-A- 1 852 613
- CN-A- 101 106 451
- CN-A- 102 036 200
- CN-A- 102 163 153
- CN-A- 103 222 290
- US-A1- 2008 313 738
- US-A1- 2011 004 932
- US-A1- 2013 276 092
- K V S Mounika ET AL: "IPV6 and Deep Packet Inspection", International Journal of Innovative Technology and Exploring Engineering (IJITEE), 1 November 2012 (2012-11-01), pages 2278-3075, XP055517676, Retrieved from the Internet: URL:https://pdfs.semanticscholar.org/0a5c/ 292d2d26cb29ce4266cfee691f0352994c5f.pdf [retrieved on 2018-10-22]

## Description

### TECHNICAL FIELD

The present invention relates to the field of data security, and in particular, to a data security protection method and an apparatus.

### BACKGROUND

In nowadays society, various aspects of people's life are inseparable from a network, and a personal online banking account, a shopping website, an interest website, and the like can be visited by using the network. To protect user privacy, when visiting these websites, a user usually uses a security protocol such as the Secure Sockets Layer (Security Sockets Layer, SSL for short), the Transport Layer Security (Transport Layer Security, TLS for short), and the Internet Protocol Security (Internet Protocol Security, IPSec for short) to establish a secure channel between both communication parties. The secure channel provides encryption and integrity protection for all data transmitted between both communication parties, so as to prevent leakage of user information.

An existing security protocol performs an encryption processing on all content (which includes service content information, protocol control information, and the like that are accessed by the user) transmitted by both communication parties, and this security protection manner is actually an over-encryption manner (encryption is performed on all transmitted information, regardless of whether the information really needs to be encrypted). Consequently, various network service performance optimization or deep packet inspection (Deep Packet Inspection, DPI for short) devices deployed in an operator network cannot process a service due to failure to perceive the transmitted content.

In the prior art the following documents relate to the technological background of the present invention:
D1: US 2011/004932 A1 (SPATSCHECK OLIVER **[US] ET AL) 6 January 2011**
**D2:** US 2013/276092 A1 (SUN YI **[US] ET AL) 17 October 2013**

Document D1 describes the exchange of data packets relating IPV6 and IPV4 data protocols. As is well known, the IPV6 packet can be encapsulated in an IPV4 packet. A network module in document D1 carries out a DPI inspection of payload and header information which is in contrast to a "shallow packet inspection" which only analyses the packet headers exclusively.

Document D2 relates to a system and method for dynamic security insertion in network virtualisation. In document D2 the method can include the transmitting of a routing decision for the data packet to a second device to route the data based on the routing decision.

### SUMMARY

The object of the present invention is to provide a data security protection method and an apparatus, so as to prevent a network side device deployed in an operator network from being inoperative. This object is solved by a data security protection method according to claim 1 and claim 4, a network side device according to claim 6 as well as a first device according to claim 9. Further advantageous embodiments and improvements of the invention are listed in the dependent claims.

Hereinafter, before coming to a detailed discussion of the embodiments of the invention with reference to the attached drawings, aspects of the invention which contribute to the understanding of the invention are explained below.

Hence, it may be understood that the following technical solutions are useable for the understanding of the embodiments of the present invention to achieve the foregoing objective as explained below in further detail.

According to a first aspect, a data security protection method is provided, including:
receiving, by a network side device, a target message that carries target data and that is sent by a first device, where the target data is data transmitted by the first device to a second device, the target message includes an unencrypted area and an integrity protection encryption area, the unencrypted area is used to carry data that does not need to be encrypted, the data that does not need to be encrypted is data in the target data or data related to the target data, the integrity protection encryption area is used to carry data that needs integrity protection and encryption, and the data that needs integrity protection and encryption is data in the target data;
performing, by the network side device, service processing on the target message based on the data carried in the unencrypted area in the target message; and
sending, by the network side device to the second device, a target message obtained after the service processing.

The unencrypted area includes an unprotected area and an integrity protection unencrypted area, the unprotected area is used to carry data that does not need integrity protection and does not need to be encrypted, and the integrity protection unencrypted area is used to carry data that needs integrity protection but does not need to be encrypted.

The data on which integrity protection has been performed in the target message is data on which integrity protection is performed by using a first security parameter negotiated between the first device and the second device. The data on which encryption has been performed in the target message is data on which encryption is performed by using a second security parameter negotiated between the first device and the second device.

Optionally, after the performing, by the network side device, service processing on the target message based on the data carried in the unencrypted area in the target message, the method further includes:
adding, by the network side device to the unprotected area in the target message, a processing result of performing the service processing on the target message based on the data carried in the unencrypted area in the target message; and
the sending, by the network side device to the second device, a target message obtained after the service processing includes:
   sending, by the network side device to the second device, the target message that carries the processing result.

Optionally, the performing, by the network side device, service processing on the target message based on the data carried in the unencrypted area in the target message includes:
obtaining, by the network side device, the data carried in the unencrypted area; and
performing, by the network side device, service optimization on the target message based on the data carried in the unencrypted area.

The target data is carried in the integrity protection encryption area, the data that needs integrity protection but does not need to be encrypted in the target data is carried in the integrity protection unencrypted area, and the data that does not need integrity protection and does not need to be encrypted in the target data is carried in the unprotected area; or the target data is carried in the integrity protection encryption area, and metadata of the target data is carried in the unencrypted area; or the data that needs integrity protection and needs to be encrypted in the target data is carried in the integrity protection encryption area, the data that needs integrity protection but does not need to be encrypted in the target data is carried in the integrity protection unencrypted area, and the data that does not need integrity protection and does not need to be encrypted in the target data is carried in the unprotected area.

According to a second aspect, a data security protection method is provided, including:
determining, by a first device, a target message carrying target data, where the target data is data transmitted by the first device to a second device, the target message includes an unencrypted area and an integrity protection encryption area, the unencrypted area is used to carry data that does not need to be encrypted, the data that does not need to be encrypted is data in the target data or data related to the target data, the integrity protection encryption area is used to carry data that needs integrity protection and encryption, and the data that needs integrity protection and encryption is data in the target data; and
sending, by the first device, the target message to a network side device, so that the network side device performs service processing on the target message based on the data carried in the unencrypted area in the target message.

The unencrypted area includes an unprotected area and an integrity protection unencrypted area, the unprotected area is used to carry data that does not need integrity protection and does not need to be encrypted, and the integrity protection unencrypted area is used to carry data that needs integrity protection but does not need to be encrypted.

The data on which integrity protection has been performed in the target message is data on which integrity protection is performed by using a first security parameter negotiated between the first device and the second device. The data on which encryption has been performed in the target message is data on which encryption is performed by using a second security parameter negotiated between the first device and the second device.

Optionally, the determining, by a first device, a target message includes:
adding, by the first device, the target data to the integrity protection encryption area, adding, to the integrity protection unencrypted area, the data that needs integrity protection but does not need to be encrypted in the target data, and adding, to the unprotected area, the data that does not need integrity protection and does not need to be encrypted in the target data; or
adding, by the first device, the target data to the integrity protection encryption area, and adding metadata of the target data to the unencrypted area; or
adding, by the first device to the integrity protection encryption area, the data that needs integrity protection and needs to be encrypted in the target data, adding, to the integrity protection unencrypted area, the data that needs integrity protection but does not need to be encrypted in the target data, and adding, to the unprotected area, the data that does not need integrity protection and does not need to be encrypted in the target data.

According to a third aspect, a network side device is provided, including:
a receiving unit, configured to receive a target message that carries target data and that is sent by a first device, where the target data is data transmitted by the first device to a second device, the target message includes an unencrypted area and an integrity protection encryption area, the unencrypted area is used to carry data that does not need to be encrypted, the data that does not need to be encrypted is data in the target data or data related to the target data, the integrity protection encryption area is used to carry data that needs integrity protection and encryption, and the data that needs integrity protection and encryption is data in the target data;
a processing unit, configured to perform service processing on the target message based on the data carried in the unencrypted area in the target message; and
a sending unit, configured to send, to the second device, a target message obtained after the service processing.

The unencrypted area includes an unprotected area and an integrity protection unencrypted area, the unprotected area is used to carry data that does not need integrity protection and does not need to be encrypted, and the integrity protection unencrypted area is used to carry data that needs integrity protection but does not need to be encrypted.

The data on which integrity protection has been performed in the target message is data on which integrity protection is performed by using a first security parameter negotiated between the first device and the second device. The data on which encryption has been performed in the target message is data on which encryption is performed by using a second security parameter negotiated between the first device and the second device.

Optionally, the network side device further includes:
a bearing unit, configured to add, to the unprotected area in the target message, a processing result of performing the service processing on the target message based on the data carried in the unencrypted area in the target message; where
the sending unit is specifically configured to send, to the second device, the target message that carries the processing result.

Optionally, the processing unit is specifically configured to:
obtain the data carried in the unencrypted area; and
perform service optimization on the target message based on the data carried in the unencrypted area.

Optionally, the target data is carried in the integrity protection encryption area, the data that needs integrity protection but does not need to be encrypted in the target data is carried in the integrity protection unencrypted area, and the data that does not need integrity protection and does not need to be encrypted in the target data is carried in the unprotected area; or the target data is carried in the integrity protection encryption area, and metadata of the target data is carried in the unencrypted area; or the data that needs integrity protection and needs to be encrypted in the target data is carried in the integrity protection encryption area, the data that needs integrity protection but does not need to be encrypted in the target data is carried in the integrity protection unencrypted area, and the data that does not need integrity protection and does not need to be encrypted in the target data is carried in the unprotected area.

According to a fourth aspect, a first device is provided, including:
a determining unit, configured to determine a target message carrying target data, where the target data is data transmitted by the first device to a second device, the target message includes an unencrypted area and an integrity protection encryption area, the unencrypted area is used to carry data that does not need to be encrypted, the data that does not need to be encrypted is data in the target data or data related to the target data, the integrity protection encryption area is used to carry data that needs integrity protection and encryption, and the data that needs integrity protection and encryption is data in the target data; and
a sending unit, configured to send the target message to a network side device, so that the network side device performs service processing on the target message based on the data carried in the unencrypted area in the target message.

The unencrypted area includes an unprotected area and an integrity protection unencrypted area, the unprotected area is used to carry data that does not need integrity protection and does not need to be encrypted, and the integrity protection unencrypted area is used to carry data that needs integrity protection but does not need to be encrypted.

The data on which integrity protection has been performed in the target message is data on which integrity protection is performed by using a first security parameter negotiated between the first device and the second device. The data on which encryption has been performed in the target message is data on which encryption is performed by using a second security parameter negotiated between the first device and the second device.

Optionally, the determining unit is specifically configured to:
add the target data to the integrity protection encryption area, add, to the integrity protection unencrypted area, the data that needs integrity protection but does not need to be encrypted in the target data, and add, to the unprotected area, the data that does not need integrity protection and does not need to be encrypted in the target data; or
add the target data to the integrity protection encryption area, and add metadata of the target data to the unencrypted area; or
add, to the integrity protection encryption area, the data that needs integrity protection and needs to be encrypted in the target data, add, to the integrity protection unencrypted area, the data that needs integrity protection but does not need to be encrypted in the target data, and add, to the unprotected area, the data that does not need integrity protection and does not need to be encrypted in the target data.

According to a fifth aspect, a network side device is provided, including a receiver, a memory, a processor, and a transmitter, where
the receiver is configured to receive a target message that carries target data and that is sent by a first device, where the target data is data transmitted by the first device to a second device, the target message includes an unencrypted area and an integrity protection encryption area, the unencrypted area is used to carry data that does not need to be encrypted, the data that does not need to be encrypted is data in the target data or data related to the target data, the integrity protection encryption area is used to carry data that needs integrity protection and encryption, and the data that needs integrity protection and encryption is data in the target data;
the memory is configured to store a group of code, and the processor performs the following action based on the group of code: performing service processing on the target message based on the data carried in the unencrypted area in the target message; and
the transmitter is configured to send, to the second device, a target message obtained after the service processing.

The unencrypted area includes an unprotected area and an integrity protection unencrypted area, the unprotected area is used to carry data that does not need integrity protection and does not need to be encrypted, and the integrity protection unencrypted area is used to carry data that needs integrity protection but does not need to be encrypted.

The data on which integrity protection has been performed in the target message is data on which integrity protection is performed by using a first security parameter negotiated between the first device and the second device. The data on which encryption has been performed in the target message is data on which encryption is performed by using a second security parameter negotiated between the first device and the second device.

Optionally, the processor is further configured to:
add, to the unprotected area in the target message, a processing result of performing the service processing on the target message based on the data carried in the unencrypted area in the target message; and
the transmitter is specifically configured to send, to the second device, the target message that carries the processing result.

Optionally, the processor is specifically configured to:
obtain the data carried in the unencrypted area; and
perform service optimization on the target message based on the data carried in the unencrypted area.

Optionally, the target data is carried in the integrity protection encryption area, the data that needs integrity protection but does not need to be encrypted in the target data is carried in the integrity protection unencrypted area, and the data that does not need integrity protection and does not need to be encrypted in the target data is carried in the unprotected area; or the target data is carried in the integrity protection encryption area, and metadata of the target data is carried in the unencrypted area; or the data that needs integrity protection and needs to be encrypted in the target data is carried in the integrity protection encryption area, the data that needs integrity protection but does not need to be encrypted in the target data is carried in the integrity protection unencrypted area, and the data that does not need integrity protection and does not need to be encrypted in the target data is carried in the unprotected area.

According to a sixth aspect, a first device is provided, including a memory, a processor, and a transmitter, wherein
the memory is configured to store a group of code, and the processor performs the following action based on the group of code:
determining a target message carrying target data, where the target data is data transmitted by the first device to a second device, the target message includes an unencrypted area and an integrity protection encryption area, the unencrypted area is used to carry data that does not need to be encrypted, the data that does not need to be encrypted is data in the target data or data related to the target data, the integrity protection encryption area is used to carry data that needs integrity protection and encryption, and the data that needs integrity protection and encryption is data in the target data; and
the transmitter is configured to send the target message to a network side device, so that the network side device performs service processing on the target message based on the data carried in the unencrypted area in the target message.

The unencrypted area includes an unprotected area and an integrity protection unencrypted area, the unprotected area is used to carry data that does not need integrity protection and does not need to be encrypted, and the integrity protection unencrypted area is used to carry data that needs integrity protection but does not need to be encrypted.

The data on which integrity protection has been performed in the target message is data on which integrity protection is performed by using a first security parameter negotiated between the first device and the second device. The data on which encryption has been performed in the target message is data on which encryption is performed by using a second security parameter negotiated between the first device and the second device.

Optionally, the processor is specifically configured to:
add the target data to the integrity protection encryption area, add, to the integrity protection unencrypted area, the data that needs integrity protection but does not need to be encrypted in the target data, and add, to the unprotected area, the data that does not need integrity protection and does not need to be encrypted in the target data; or
add the target data to the integrity protection encryption area, and add metadata of the target data to the unencrypted area; or
add, to the integrity protection encryption area, the data that needs integrity protection and needs to be encrypted in the target data, add, to the integrity protection unencrypted area, the data that needs integrity protection but does not need to be encrypted in the target data, and add, to the unprotected area, the data that does not need integrity protection and does not need to be encrypted in the target data.

According to the method and the apparatus provided in the embodiments of the present invention, the first device may add the data that does not need to be encrypted to the unencrypted area in the target message and send the data that does not need to be encrypted to the network side device, and the network side device may obtain the data in the unencrypted area, and perform the service processing on the target message based on the data in the unencrypted area, so as to prevent the network side device deployed in the operator network from being inoperative.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of communication between a first device and a second device in the prior art;
FIG. 2 is a flowchart of a data security protection method according to an embodiment of the present invention;
FIG. 3 is a schematic diagram of composition of a target message according to an embodiment of the present invention;
FIG. 4 is a schematic diagram of carrying data in a target message according to an embodiment of the present invention;
FIG. 5 is a schematic diagram of carrying data in another target message according to an embodiment of the present invention;
FIG. 6 is a schematic diagram of carrying data by using the TLS Record Protocol in the prior art;
FIG. 7 is a schematic diagram of communication between a first device and a second device according to an embodiment of the present invention;
FIG. 8 is a schematic diagram of composition of a network side device according to an embodiment of the present invention;
FIG. 9 is a schematic diagram of composition of another network side device according to an embodiment of the present invention;
FIG. 10 is a schematic diagram of composition of another network side device according to an embodiment of the present invention;
FIG. 11 is a schematic diagram of composition of a first device according to an embodiment of the present invention; and
FIG. 12 is a schematic diagram of composition of another first device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

To enable a person skilled in the art to understand the technical solutions provided in the embodiments of the present invention more clearly, the prior art related to this application is briefly described.

### 1. Data encryption

A basic idea of the data encryption is to change data that needs to be protected into some irregular data by replacing and converting the data that needs to be protected, to disguise the data that needs to be protected, so that a third party cannot learn of content of the protected data. In this process, the data that needs to be protected is referred to as a plaintext, an algorithm for replacing and converting is referred to as an encryption algorithm, a result of the plaintext after replacement and conversion is referred to as a ciphertext, and a process of generating the ciphertext from the plaintext is referred to as encryption. Decryption is a process opposite to the encryption, and converts the ciphertext into the plaintext. Operations of the encryption algorithm and a decryption algorithm are usually performed under control of a set of keys, which are respectively referred to as an encryption key and a decryption key.

### 2. Data integrity protection

Integrity protection (Integrity Protection) is a method for performing security protection on data, and a function of the integrity protection is mainly to ensure that the data is not modified by a third party in a process of transmission between both communication parties. If the data on which integrity protection is performed is tampered with by the third party, a receive end of the data may detect that the data is tampered with by the third party when receiving the data. In this case, the receive end usually directly discards the received data.

It should be noted that the data on which integrity protection is performed is visible to the third party, in other words, the third party may read the data on which integrity protection is performed.

Generally, a transmit end generates a message digest of the data by using an integrity protection key that is negotiated with the receive end and the data that is sent to the receive end, and then transmits the message digest together with the data. After receiving the data and the message digest, the receive end uses the same method as the transmit end to calculate a message digest. If the message digest obtained by calculation is the same as the received message digest, it is considered that the data is not tampered with. If the message digest obtained by calculation is different from the received message digest, it is considered that the data has been tampered with.

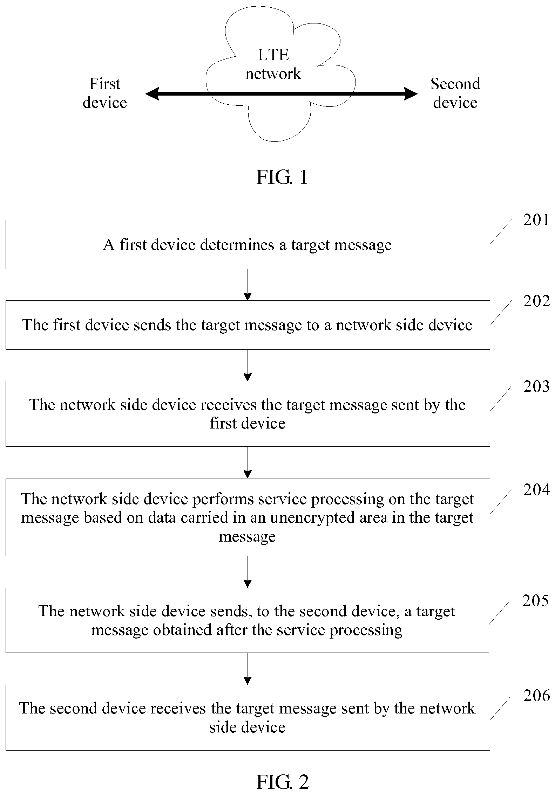

The method provided in this embodiment of the present invention may be applied to a network system such as CDMA2000 (Code Division Multiple Access 2000), Wideband Code Division Multiple Access (Wideband Code Division Multiple Access, W-CDMA for short), Time Division-Synchronous Code Division Multiple Access (Time Division-Synchronous Code Division Multiple Access, TD-SCDMA for short), Long Term Evolution (Long Term Evolution, LTE for short), and LTE-advanced. An LTE network is used as an example. As shown in FIG. 1, a first device communicates with a second device by using the LTE network, the first device may be a terminal device (such as a mobile phone, a tablet computer, and a notebook computer), and the second device may be a network server (namely, a host running server software, for example, a server of Sina, and a server of Baidu). Alternatively, the first device may be the network server, the second device may be the terminal device, and a network side device in this embodiment of the present invention is a device in the network system.

An embodiment of the present invention provides a data security protection method. As shown in FIG. 2, the method includes the following steps.

201. A first device determines a target message.

The target message is used to carry target data, the target data is data transmitted by the first device to a second device, the target message includes an unencrypted area and an integrity protection encryption area, the unencrypted area is used to carry data that does not need to be encrypted, the data that does not need to be encrypted is data in the target data or data related to the target data, the integrity protection encryption area is used to carry data that needs integrity protection and encryption, and the data that needs integrity protection and encryption is data in the target data.

Optionally, the unencrypted area includes an unprotected area and an integrity protection unencrypted area, the unprotected area is used to carry data that does not need integrity protection and does not need to be encrypted, and the integrity protection unencrypted area is used to carry data that needs integrity protection but does not need to be encrypted.

Because the unencrypted area is used to carry the data that does not need to be encrypted, the data carried in the unencrypted area is unencrypted data. Because the integrity protection encryption area is used to carry the data that needs integrity protection and encryption, the data carried in the integrity protection encryption area is data on which integrity protection and encryption have been performed, and the data carried in the integrity protection encryption area is invisible to a device except the first device and the second device. Specifically, the data carried in the unprotected area is the data on which integrity protection and encryption are not performed, the device except the first device and the second device may obtain or modify the data carried in the unprotected area, or may add data to the unprotected area (when adding the data to the unprotected area, the device except the first device and the second device may also use a security parameter negotiated with the first device or the second device to perform security protection on the added data). The data carried in the integrity protection unencrypted area is the data on which integrity protection has been performed but the encryption is not performed, the device except the first device and the second device may obtain the data carried in the integrity protection unencrypted area, but cannot modify the data carried in the integrity protection unencrypted area, or cannot add data to the integrity protection unencrypted area.

Generally, specific content of a service in the target message needs integrity protection and encryption, content that is allowed to be read by a third party but is not allowed to be modified by the third party in the target message needs integrity protection but does not need to be encrypted, and content that is allowed to be read by the third party and is allowed to be modified by the third party in the target message does not need integrity protection and does not need to be encrypted.

It should be noted that the data on which integrity protection has been performed in the target message is data on which integrity protection is performed by using a first security parameter negotiated between the first device and the second device. The data on which encryption has been performed in the target message is data on which encryption is performed by using a second security parameter negotiated between the first device and the second device. To be specific, the data carried in the unprotected area is data on which encryption and the integrity protection are not performed by using a security parameter negotiated by both communication parties. The data carried in the integrity protection unencrypted area is data on which integrity protection is performed by using the first security parameter negotiated by both communication parties but the encryption is not performed. The data carried in the integrity protection encryption area is data on which integrity protection and encryption are performed by using the first security parameter and the second security parameter that are negotiated by both communication parties.

It should be noted that, security protection may be performed on the data in the unprotected area by using a security parameter negotiated between a network side device and a network server (or a terminal device). For example, a message transmitted between the network server and the terminal device may pass through networks of a plurality of operators. However, the network server only wants to allow a network side device in a particular (or some) network operator A that has a contractual relationship with the network server to be capable of reading information in the unprotected area. Then, the network server may encrypt the data in the unprotected area by using the security parameter negotiated between the network server and the network side device of the network operator A. It should be noted that in this case, when the data in the unprotected area is the data in the target data and the data in the unprotected area is not redundantly carried in the integrity protection encryption area or the integrity protection unencrypted area, the terminal device also needs to be capable of decrypting the data in the unprotected area, so as to obtain the data in the unprotected area. Alternatively, when the network side device of the network operator needs to add information to the unprotected area, the added information is accepted by the network server only when the added information is signed.

Similarly, for the integrity protection unencrypted area, the network server or the terminal device may also perform the encryption by using a security parameter negotiated with the network side device, so as to allow, to read information in the integrity protection unencrypted area in the message, a particular (or some) operator network through which the message transmitted between both communication parties passes.

For example, when the target message is a Hypertext Transfer Protocol (HyperText Transfer Protocol, HTTP for short) message that transmits video data, data carried in an unprotected area of the HTTP message may be data that indicates a service type transmitted in the HTTP message (which is a "video" type herein), data carried in an integrity protection unencrypted area may be a video bit rate, and data carried in an integrity protection encryption area may be specific video content. This is merely an example description of the target message herein, and does not limit the target message. Specifically, when the target data is different, data carried in the unprotected area, data carried in the integrity protection unencrypted area, and data carried in the integrity protection encryption area may also be different.

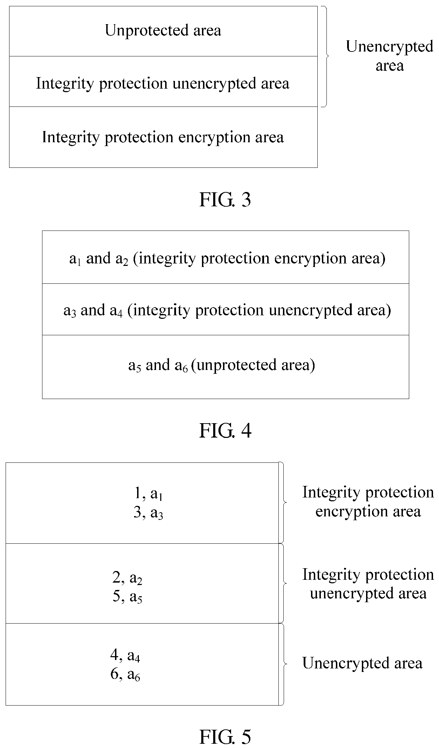

For example, composition of the target message in this embodiment of the present invention may be shown in FIG. 3.

Optionally, in a specific implementation, step 201 may be implemented in any one of the following three manners.

In a first manner, the first device adds the target data to the integrity protection encryption area, adds, to the integrity protection unencrypted area, the data that needs integrity protection but does not need to be encrypted in the target data, and adds, to the unprotected area, the data that does not need integrity protection and does not need to be encrypted in the target data.

In a second manner, the first device adds the target data to the integrity protection encryption area, and adds metadata (metadata) of the target data to the unencrypted area.

The metadata of the target data is data used to describe the target data.

In a third manner, the first device adds, to the integrity protection encryption area, the data that needs integrity protection and needs to be encrypted in the target data, adds, to the integrity protection unencrypted area, the data that needs integrity protection but does not need to be encrypted in the target data, and adds, to the unprotected area, the data that does not need integrity protection and does not need to be encrypted in the target data.

For example, if the target data includes a₁, a₂, a₃, and a₄, where a₁ is the data that does not need integrity protection and does not need to be encrypted in the target data, a₂ is the data that needs integrity protection but does not need to be encrypted in the target data, a₃ and a₄ are the data that needs integrity protection and encryption in the target data, and a₅ is the metadata of the target data, the data carried in the unprotected area may be a₁, the data carried in the integrity protection unencrypted area may be a₂, and the data carried in the integrity protection encryption area may be a₃ and a₄; or the data carried in the unprotected area may be a₁, the data carried in the integrity protection unencrypted area may be a₂, and the data carried in the integrity protection encryption area may be a₁, a₂, a₃, and a₄; or the data carried in the unencrypted area may be a₅, and the data carried in the integrity protection encryption area may be a₁, a₂, a₃, and a₄.

Specifically, when step 201 is specifically implemented in the third manner, a manner 1 or a manner 2 may be further used for implementation.

In the manner 1, when data of each attribute in data of three different attributes included in the target data is continuously stored in the target data, and a sequence of the data of three attributes in the target data is the same as a sequence of three areas in the target message, the first device separately adds the data of three attributes to a corresponding area in the three areas, so that the second device sequentially combines, based on the sequence of the three areas in the received target message, the data carried in the three areas to obtain the target data.

Specifically, the data carried in the target message may be shown in FIG. 4 if the data included in the target data is sequentially a₁, a₂, a₃, a₄, a₅, and a₆, and if a₁ and a₂ are the data that needs integrity protection and needs to be encrypted in the target data, a₃ and a₄ are the data that needs integrity protection but does not need to be encrypted in the target data, a₅ and a₆ are the data that does not need integrity protection and does not need to be encrypted in the target data, and the sequence of the three areas in the target message is the integrity protection encryption area, the integrity protection unencrypted area, and the unprotected area.

In the manner 2, the first device divides the data in the target data into N pieces of data, where each piece of data has one attribute and one unique number, and the first device separately adds the N pieces of data to the corresponding area in the three areas based on the attributes of the N pieces of data, so that the second device combines the N pieces of data based on the numbers of the N pieces of data, to obtain the target data, and N is an integer greater than or equal to 3.

Specifically, if the data included in the target data is sequentially a₁, a₂, a₃, a₄, a₅, and a₆, numbers of a₁, a₂, a₃, a₄, a₅, and a₆ are 1, 2, 3, 4, 5 and 6. The data carried in the target message may be shown in FIG. 5 if a₁ and a₃ are the data that needs integrity protection and needs to be encrypted in the target data, a₂ and a₅ are the data that needs integrity protection but does not need to be encrypted in the target data, a₄ and a₆ are the data that does not need integrity protection and does not need to be encrypted in the target data, and the sequence of the three areas in the target message is the integrity protection encryption area, the integrity protection unencrypted area, and the unprotected area.

In the manner 1 and the manner 2, the data of three attributes is respectively the data that needs integrity protection and needs to be encrypted, the data that needs integrity protection but does not need to be encrypted, and the data that does not need integrity protection and does not need to be encrypted, and the three areas are respectively the unprotected area, the integrity protection unencrypted area, and the integrity protection encryption area.

It should be noted that data of some attributes in the data of three different attributes included in the target data may be empty.

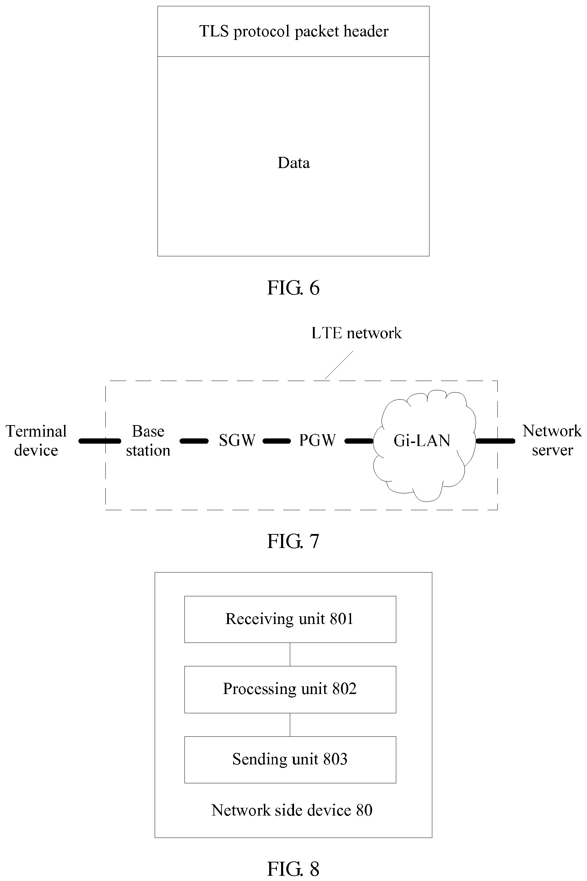

For example, in the prior art, when the TLS protocol is used between both communication parties, the TLS Record Protocol (TLS Record Protocol) is used to carry content on which security protection is performed. The TLS Record Protocol includes a TLS protocol packet header and the content on which security protection is performed, specifically, as shown in FIG. 6 (a data area in FIG. 6 is the content on which security protection is performed). When the method provided in this embodiment of the present invention is used, a TLS record layer may be divided into three areas: the unprotected area, the integrity protection unencrypted area, and the integrity protection encryption area, to transmit data from a TLS upper layer (to be specific, data carried in TLS, for example, if an HTTP message is transmitted by using the TLS, upper-layer data herein is data of an HTTP layer). Specifically, the TLS protocol packet header in FIG. 6 and the data that does not need integrity protection and does not need to be encrypted in the content on which security protection is performed may be carried in the unprotected area, the data that needs integrity protection but does not need to be encrypted in the content on which security protection is performed may be carried in the integrity protection unencrypted area, and the data that needs security protection and needs to be encrypted in the content on which security protection is performed may be carried in the integrity protection encryption area. Specifically, there is no need to modify an existing TLS record layer structure. Only an extended cipher type (security protection type) needs to be defined: a generic partial cipher (partial security protection). Each cipher type represents a specific type of security protection, and the generic partial cipher internally includes three areas: the unprotected area, the integrity protection unencrypted area, and the integrity protection encryption area.

202. The first device sends the target message to a network side device.

The network side device may specifically include a network service performance optimization device and/or a DPI device, and the like in an operator network. An LTE network is used as an example. As shown in FIG. 7, the LTE network includes a base station, a serving gateway (Serving GateWay, SGW for short), a packet data gateway (PDN GateWay, PGW for short), a Gi-LAN, and the like, and various network service processing entities may be deployed in the Gi-LAN of the LTE network. The network service performance optimization device in this embodiment of the present invention may be a network service processing entity deployed in the Gi-LAN. When the network side device is the DPI device, the DPI device may perform an operation such as service type detection by using the data carried in the unencrypted area in the target message.

203. The network side device receives the target message sent by the first device.

204. The network side device performs service processing on the target message based on data carried in an unencrypted area in the target message.

Because the data carried in the unencrypted area is not encrypted, the network side device may obtain the data carried in the unencrypted area and perform the service processing based on the obtained data carried in the unencrypted area.

Specifically, in a specific implementation, step 204 includes: obtaining, by the network side device, the data carried in the unencrypted area, and performing, by the network side device, service optimization on the target message based on the data carried in the unencrypted area.

For example, when the network side device includes the network service performance optimization device and the DPI device, if the data carried in the unencrypted area includes the HTTP protocol packet header, the DPI device may determine a service type of the target message based on the HTTP protocol packet header, and the network service performance optimization device may perform the service optimization based on the service type of the target message. For example, the network service performance optimization device may allocate an appropriate network resource to the target message based on the service type of the target message. When the target data carried in the target message is video data, the network service performance optimization device may transcode the target message based on a network status.

205. The network side device sends, to the second device, a target message obtained after the service processing.

Optionally, after step 204, the method further includes: adding, by the network side device to the unprotected area in the target message, a processing result of performing the service processing on the target message based on the data carried in the unencrypted area in the target message. In this case, step 205 includes: sending, by the network side device to the second device, the target message that carries the processing result.

Specifically, the adding, by the network side device, a processing result to the unprotected area in the target message may be: changing, by the network side device, the data in the unprotected area to the processing result, or adding, by the network side device, the processing result to the unprotected area.

For example, the processing result may be specifically header enhancement, charging redirection, or the like.

206. The second device receives the target message sent by the network side device.

Specifically, after receiving the target message sent by the network side device, the second device first performs security verification on data in the integrity protection unencrypted area and the integrity protection encryption area based on the security parameter negotiated with the first device. For the data in the unprotected area, the second device may accept or discard the data, or may determine whether to accept or discard the data after performing verification in a preset manner.

Specifically, when the first device performs step 201 in the manner 1, the second device sequentially combines, based on the sequence of the three areas in the received target message, the data carried in the three areas to obtain the target data.

For example, based on the example described in FIG. 4, the second device sequentially combines the data in the integrity protection encryption area, the integrity protection unencrypted area, and the unprotected area in the target message to obtain the target data.

When the first device performs step 201 in the manner 2, the second device combines the N pieces of data based on the numbers of the N pieces of data, to obtain the target data.

For example, based on the example described in FIG. 5, the second device sequentially combines data whose numbers are 1, 2, 3, 4, 5, and 6 in the target message to obtain the target data.

According to the method provided in this embodiment of the present invention, the first device may add the data that does not need to be encrypted to the unencrypted area in the target message and send the data that does not need to be encrypted to the network side device, and the network side device may obtain the data in the unencrypted area, and perform the service processing on the target message based on the data in the unencrypted area, so as to prevent the network side device deployed in the operator network from being inoperative.

An embodiment of the present invention further provides a network side device 80. As shown in FIG. 8, the network side device 80 includes:
a receiving unit 801, configured to receive a target message sent by a first device, where the target message is used to carry target data, the target data is data transmitted by the first device to a second device, the target message includes an unencrypted area and an integrity protection encryption area, the unencrypted area is used to carry data that does not need to be encrypted, the data that does not need to be encrypted is data in the target data or data related to the target data, the integrity protection encryption area is used to carry data that needs integrity protection and encryption, and the data that needs integrity protection and encryption is data in the target data;
a processing unit 802, configured to perform service processing on the target message based on the data carried in the unencrypted area in the target message; and
a sending unit 803, configured to send, to the second device, a target message obtained after the service processing.

Optionally, the unencrypted area includes an unprotected area and an integrity protection unencrypted area, the unprotected area is used to carry data that does not need integrity protection and does not need to be encrypted, and the integrity protection unencrypted area is used to carry data that needs integrity protection but does not need to be encrypted.

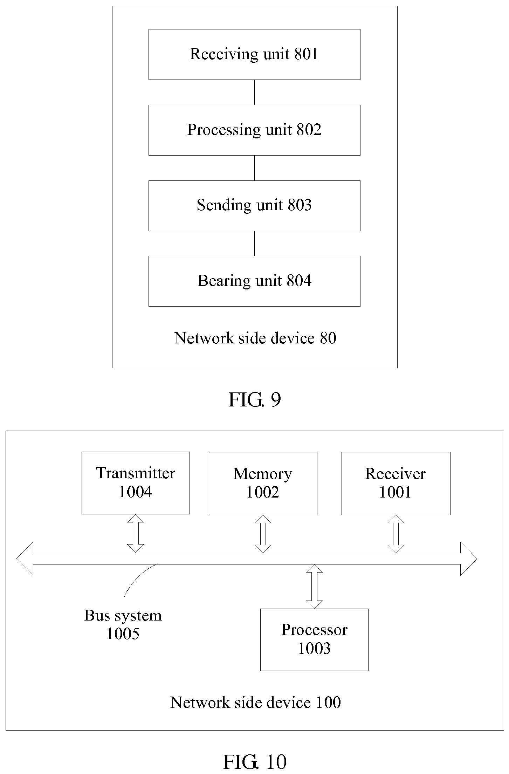

Optionally, as shown in FIG. 9, the network side device 80 further includes:
a bearing unit 804, configured to add, to the unprotected area in the target message, a processing result of performing the service processing on the target message based on the data carried in the unencrypted area in the target message; where
the sending unit 803 is specifically configured to send, to the second device, the target message that carries the processing result.

Optionally, the processing unit 802 is specifically configured to:
obtain the data carried in the unencrypted area; and
perform service optimization on the target message based on the data carried in the unencrypted area.

Optionally, the target data is carried in the integrity protection encryption area, the data that needs integrity protection but does not need to be encrypted in the target data is carried in the integrity protection unencrypted area, and the data that does not need integrity protection and does not need to be encrypted in the target data is carried in the unprotected area; or the target data is carried in the integrity protection encryption area, and metadata of the target data is carried in the unencrypted area; or the data that needs integrity protection and needs to be encrypted in the target data is carried in the integrity protection encryption area, the data that needs integrity protection but does not need to be encrypted in the target data is carried in the integrity protection unencrypted area, and the data that does not need integrity protection and does not need to be encrypted in the target data is carried in the unprotected area.

The network side device provided in this embodiment of the present invention obtains the data in the unencrypted area in the target message based on the received target message sent by the first device, and performs the service processing on the target message based on the data in the unencrypted area, so as to prevent the network side device deployed in an operator network from being inoperative.

In terms of hardware implementation, each unit in the network side device 80 may be embedded in or independent of a processor of the network side device 80 in a form of hardware, or may be stored in a memory of the network side device 80 in a form of software, so that the processor invokes and performs an operation corresponding to each unit. The processor may be a central processing unit (Central Processing Unit, CPU for short), an application-specific integrated circuit (Application Specific Integrated Circuit, ASIC for short), or one or more integrated circuits configured to implement this embodiment of the present invention.

An embodiment of the present invention further provides a network side device 100, as shown in FIG. 10, including a receiver 1001, a memory 1002, a processor 1003, and a transmitter 1004.

The receiver 1001, the memory 1002, the processor 1003, and the transmitter 1004 are coupled together by using a bus system 1005. The memory 1002 may include a random access memory, and may further include a non-volatile memory, such as at least one disk memory. The bus system 1005 may be an industry standard architecture (Industry Standard Architecture, ISA for short) bus, a peripheral component interconnect (Peripheral Component interconnect, PCI for short) bus, an extended industry standard architecture (Extended Industry Standard Architecture, EISA for short) bus, or the like. The bus system 1005 may be classified into an address bus, a data bus, a control bus, and the like. For ease of representation, only one thick line is used in FIG. 10, but it does not indicate that there is only one bus or one type of bus.

The receiver 1001 is configured to receive a target message sent by a first device, where the target message is used to carry target data, the target data is data transmitted by the first device to a second device, the target message includes an unencrypted area and an integrity protection encryption area, the unencrypted area is used to carry data that does not need to be encrypted, the data that does not need to be encrypted is data in the target data or data related to the target data, the integrity protection encryption area is used to carry data that needs integrity protection and encryption, and the data that needs integrity protection and encryption is data in the target data.

The memory 1002 is configured to store a group of code, and the processor 1003 performs the following action based on the group of code: performing service processing on the target message based on the data carried in the unencrypted area in the target message.

The transmitter 1004 is configured to send, to the second device, a target message obtained after the service processing.

Optionally, the unencrypted area includes an unprotected area and an integrity protection unencrypted area, the unprotected area is used to carry data that does not need integrity protection and does not need to be encrypted, and the integrity protection unencrypted area is used to carry data that needs integrity protection but does not need to be encrypted.

Optionally, the processor 1003 is further configured to:
add, to the unprotected area in the target message, a processing result of performing the service processing on the target message based on the data carried in the unencrypted area in the target message; and
the transmitter 1004 is specifically configured to send, to the second device, the target message that carries the processing result.

Optionally, the processor 1003 is specifically configured to:
obtain the data carried in the unencrypted area; and
perform service optimization on the target message based on the data carried in the unencrypted area.

Optionally, the target data is carried in the integrity protection encryption area, the data that needs integrity protection but does not need to be encrypted in the target data is carried in the integrity protection unencrypted area, and the data that does not need integrity protection and does not need to be encrypted in the target data is carried in the unprotected area; or the target data is carried in the integrity protection encryption area, and metadata of the target data is carried in the unencrypted area; or the data that needs integrity protection and needs to be encrypted in the target data is carried in the integrity protection encryption area, the data that needs integrity protection but does not need to be encrypted in the target data is carried in the integrity protection unencrypted area, and the data that does not need integrity protection and does not need to be encrypted in the target data is carried in the unprotected area.

The network side device provided in this embodiment of the present invention obtains the data in the unencrypted area in the target message based on the received target message sent by the first device, and performs the service processing on the target message based on the data in the unencrypted area, so as to prevent the network side device deployed in an operator network from being inoperative.

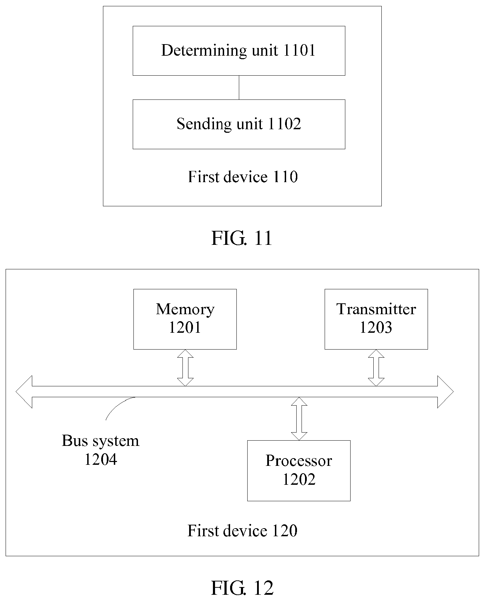

An embodiment of the present invention further provides a first device 110. As shown in FIG. 11, the first device 110 includes:
a determining unit 1101, configured to determine a target message, where the target message is used to carry target data, the target data is data transmitted by the first device to a second device, the target message includes an unencrypted area and an integrity protection encryption area, the unencrypted area is used to carry data that does not need to be encrypted, the data that does not need to be encrypted is data in the target data or data related to the target data, the integrity protection encryption area is used to carry data that needs integrity protection and encryption, and the data that needs integrity protection and encryption is data in the target data; and
a sending unit 1102, configured to send the target message to a network side device, so that the network side device performs service processing on the target message based on the data carried in the unencrypted area in the target message.

Optionally, the unencrypted area includes an unprotected area and an integrity protection unencrypted area, the unprotected area is used to carry data that does not need integrity protection and does not need to be encrypted, and the integrity protection unencrypted area is used to carry data that needs integrity protection but does not need to be encrypted.

Optionally, the determining unit 1101 is specifically configured to:
add the target data to the integrity protection encryption area, add, to the integrity protection unencrypted area, the data that needs integrity protection but does not need to be encrypted in the target data, and add, to the unprotected area, the data that does not need integrity protection and does not need to be encrypted in the target data; or
add the target data to the integrity protection encryption area, and add metadata of the target data to the unencrypted area; or
add, to the integrity protection encryption area, the data that needs integrity protection and needs to be encrypted in the target data, add, to the integrity protection unencrypted area, the data that needs integrity protection but does not need to be encrypted in the target data, and add, to the unprotected area, the data that does not need integrity protection and does not need to be encrypted in the target data.

Optionally, the determining unit 1101 is specifically configured to:
when data of each attribute in data of three different attributes included in the target data is continuously stored in the target data, and a sequence of the data of three attributes in the target data is the same as a sequence of three areas in the target message, separately add the data of three attributes to a corresponding area in the three areas, so that the second device sequentially combines, based on the sequence of the three areas in the received target message, the data carried in the three areas to obtain the target data; or
divide the data in the target data into N pieces of data, where each piece of data has one attribute and one unique number, and the first device separately adds the N pieces of data to the corresponding area in the three areas based on the attributes of the N pieces of data, so that the second device combines the N pieces of data based on the numbers of the N pieces of data, to obtain the target data, and N is an integer greater than or equal to 3, where
the data of three attributes is respectively the data that needs integrity protection and needs to be encrypted, the data that needs integrity protection but does not need to be encrypted, and the data that does not need integrity protection and does not need to be encrypted, and the three areas are respectively the unprotected area, the integrity protection unencrypted area, and the integrity protection encryption area.

The first device provided in this embodiment of the present invention may add the data that does not need to be encrypted to the unencrypted area in the target message and send the data that does not need to be encrypted to the network side device, and the network side device may obtain the data in the unencrypted area, and perform the service processing on the target message based on the data in the unencrypted area, so as to prevent the network side device deployed in an operator network from being inoperative.

In terms of hardware implementation, each unit in the first device 110 may be embedded in or independent of a processor of the first device 110 in a form of hardware, or may be stored in a memory of the first device 110 in a form of software, so that the processor invokes and performs an operation corresponding to each unit. The processor may be a CPU, an ASIC, or one or more integrated circuits configured to implement this embodiment of the present invention.

An embodiment of the present invention further provides a first device 120. As shown in FIG. 12, the first device 120 includes a memory 1201, a processor 1202, and a transmitter 1203.

The memory 1201, the processor 1202, and the transmitter 1203 are coupled together by using a bus system 1204. The memory 1202 may include a random access memory, and may further include a non-volatile memory, such as at least one disk memory. The bus system 1204 may be an ISA bus, a PCI bus, an EISA bus, or the like. The bus system 1204 may be classified into an address bus, a data bus, a control bus, and the like. For ease of representation, only one thick line is used in FIG. 12, but it does not indicate that there is only one bus or one type of bus.

The memory 1201 is configured to store a group of code, and the processor 1202 performs the following action based on the group of code:
determining a target message, where the target message is used to carry target data, the target data is data transmitted by the first device to a second device, the target message includes an unencrypted area and an integrity protection encryption area, the unencrypted area is used to carry data that does not need to be encrypted, the data that does not need to be encrypted is data in the target data or data related to the target data, the integrity protection encryption area is used to carry data that needs integrity protection and encryption, and the data that needs integrity protection and encryption is data in the target data.

The transmitter 1203 is configured to send the target message to a network side device, so that the network side device performs service processing on the target message based on the data carried in the unencrypted area in the target message.

Optionally, the unencrypted area includes an unprotected area and an integrity protection unencrypted area, the unprotected area is used to carry data that does not need integrity protection and does not need to be encrypted, and the integrity protection unencrypted area is used to carry data that needs integrity protection but does not need to be encrypted.

Optionally, the processor 1202 is specifically configured to:
add the target data to the integrity protection encryption area, add, to the integrity protection unencrypted area, the data that needs integrity protection but does not need to be encrypted in the target data, and add, to the unprotected area, the data that does not need integrity protection and does not need to be encrypted in the target data; or
add the target data to the integrity protection encryption area, and add metadata of the target data to the unencrypted area; or
add, to the integrity protection encryption area, the data that needs integrity protection and needs to be encrypted in the target data, add, to the integrity protection unencrypted area, the data that needs integrity protection but does not need to be encrypted in the target data, and add, to the unprotected area, the data that does not need integrity protection and does not need to be encrypted in the target data.

Optionally, the processor 1202 is specifically configured to:
when data of each attribute in data of three different attributes included in the target data is continuously stored in the target data, and a sequence of the data of three attributes in the target data is the same as a sequence of three areas in the target message, separately add the data of three attributes to a corresponding area in the three areas, so that the second device sequentially combines, based on the sequence of the three areas in the received target message, the data carried in the three areas to obtain the target data; or
divide the data in the target data into N pieces of data, where each piece of data has one attribute and one unique number, and the first device separately adds the N pieces of data to the corresponding area in the three areas based on the attributes of the N pieces of data, so that the second device combines the N pieces of data based on the numbers of the N pieces of data, to obtain the target data, and N is an integer greater than or equal to 3, where
the data of three attributes is respectively the data that needs integrity protection and needs to be encrypted, the data that needs integrity protection but does not need to be encrypted, and the data that does not need integrity protection and does not need to be encrypted, and the three areas are respectively the unprotected area, the integrity protection unencrypted area, and the integrity protection encryption area.

The first device provided in this embodiment of the present invention may add the data that does not need to be encrypted to the unencrypted area in the target message and send the data that does not need to be encrypted to the network side device, and the network side device may obtain the data in the unencrypted area, and perform the service processing on the target message based on the data in the unencrypted area, so as to prevent the network side device deployed in an operator network from being inoperative.

In the several embodiments provided in this application, it should be understood that the disclosed apparatus and method may be implemented in other manners. For example, the described apparatus embodiment is merely an example. For example, the module division is merely logical function division and may be other division in actual implementation. For example, a plurality of modules or components may be combined or integrated into another system, or some features may be ignored or not performed.

The modules described as separate parts may or may not be physically separate, and parts displayed as modules may or may not be physical modules, may be located in one position, or may be distributed on a plurality of network units. Some or all of the units may be selected according to actual needs to achieve the objectives of the solutions of the embodiments.

In addition, functional modules in the embodiments of the present invention may be integrated into one processing module, or two or more modules are integrated into one module. The integrated module may be implemented in a form of hardware, or may be implemented in a form of hardware in addition to a software functional module.

When the foregoing integrated module is implemented in a form of a software functional module, the integrated unit may be stored in a computer-readable storage medium. The software functional module is stored in a storage medium and includes several instructions for instructing a computer device (which may be a personal computer, a server, or a network device) to perform some of the steps of the methods described in the embodiments of the present invention. The foregoing storage medium includes: any medium that can store program code, such as a USB flash drive, a removable hard disk, a read-only memory (Read-Only Memory, ROM for short), a random access memory (Random Access Memory, RAM for short), a magnetic disk, or an optical disc.

## Claims

1. A data security protection method, comprising:
a) receiving (203), by a network side device (80, 100), a target message sent by a first device (110, 120), wherein the target message is used to carry target data, the target data is data transmitted by the first device to a second device, the target message comprises an unencrypted area and an integrity protection encryption area, the unencrypted area is used to carry data that does not need to be encrypted, the data that does not need to be encrypted is data in the target data or data related to the target data, the integrity protection encryption area is used to carry data that needs integrity protection and encryption, and the data that needs integrity protection and encryption is data in the target data;
b) performing (204), by the network side device, service processing on the target message based on the data carried in the unencrypted area in the target message; and
c) sending (205), by the network side device to the second device, a target message obtained after the service processing; and
d) wherein the unencrypted area comprises an unprotected area and an integrity protection unencrypted area, the unprotected area is used to carry data that does not need integrity protection and does not need to be encrypted, and the integrity protection unencrypted area is used to carry data that needs integrity protection but does not need to be encrypted.

2. The method according to claim 1, wherein after the performing (204), by the network side device, service processing on the target message based on the data carried in the unencrypted area in the target message, the method further comprises:
adding, by the network side device to the unprotected area in the target message, a processing result of performing the service processing on the target message based on the data carried in the unencrypted area in the target message; and
the sending (205), by the network side device to the second device, a target message obtained after the service processing comprises:
sending, by the network side device to the second device, the target message that carries the processing result.

3. The method according to claim 1 or 2, wherein the performing (204), by the network side device, service processing on the target message based on the data carried in the unencrypted area in the target message comprises:
obtaining, by the network side device, the data carried in the unencrypted area; and
performing, by the network side device, service optimization on the target message based on the data carried in the unencrypted area.

4. A data security protection method, comprising:
a) determining (201), by a first device (110, 120), a target message, wherein the target message is used to carry target data, the target data is data transmitted by the first device to a second device, the target message comprises an unencrypted area and an integrity protection encryption area, the unencrypted area is used to carry data that does not need to be encrypted, the data that does not need to be encrypted is data in the target data or data related to the target data, the integrity protection encryption area is used to carry data that needs integrity protection and encryption, and the data that needs integrity protection and encryption is data in the target data; and
b) sending (202), by the first device, the target message to a network side device (80, 100), so that the network side device performs service processing on the target message based on the data carried in the unencrypted area in the target message; and
c) wherein the unencrypted area comprises an unprotected area and an integrity protection unencrypted area, the unprotected area is used to carry data that does not need integrity protection and does not need to be encrypted, and the integrity protection unencrypted area is used to carry data that needs integrity protection but does not need to be encrypted.

5. The method according to claim 4, wherein the determining, by a first device, a target message comprises:
adding, by the first device, the target data to the integrity protection encryption area, adding, to the integrity protection unencrypted area, the data that needs integrity protection but does not need to be encrypted in the target data, and adding, to the unprotected area, the data that does not need integrity protection and does not need to be encrypted in the target data; or
adding, by the first device, the target data to the integrity protection encryption area, and adding metadata of the target data to the unencrypted area; or
adding, by the first device to the integrity protection encryption area, the data that needs integrity protection and needs to be encrypted in the target data, adding, to the integrity protection unencrypted area, the data that needs integrity protection but does not need to be encrypted in the target data, and adding, to the unprotected area, the data that does not need integrity protection and does not need to be encrypted in the target data.

6. A network side device (80, 100), comprising:
a) a receiving unit (801), configured to receive a target message sent by a first device (110, 120), wherein the target message is used to carry target data, the target data is data transmitted by the first device to a second device, the target message comprises an unencrypted area and an integrity protection encryption area, the unencrypted area is used to carry data that does not need to be encrypted, the data that does not need to be encrypted is data in the target data or data related to the target data, the integrity protection encryption area is used to carry data that needs integrity protection and encryption, and the data that needs integrity protection and encryption is data in the target data;
b) a processing unit (802), configured to perform service processing on the target message based on the data carried in the unencrypted area in the target message; and
c) a sending unit (803), configured to send, to the second device, a target message obtained after the service processing; and
d) wherein the unencrypted area comprises an unprotected area and an integrity protection unencrypted area, the unprotected area is used to carry data that does not need integrity protection and does not need to be encrypted, and the integrity protection unencrypted area is used to carry data that needs integrity protection but does not need to be encrypted.

7. The network side device (80) according to claim 6, wherein the network side device further comprises:
a bearing unit (804), configured to add, to the unprotected area in the target message, a processing result of performing the service processing on the target message based on the data carried in the unencrypted area in the target message; wherein
the sending unit (803) is specifically configured to send, to the second device, the target message that carries the processing result.

8. The network side device (80) according to claim 6 or 7, wherein the processing unit (802) is specifically configured to:
obtain the data carried in the unencrypted area; and
perform service optimization on the target message based on the data carried in the unencrypted area.

9. A first device (110, 120), comprising:
a) a determining unit (1101), configured to determine a target message, wherein the target message is used to carry target data, the target data is data transmitted by the first device to a second device, the target message comprises an unencrypted area and an integrity protection encryption area, the unencrypted area is used to carry data that does not need to be encrypted, the data that does not need to be encrypted is data in the target data or data related to the target data, the integrity protection encryption area is used to carry data that needs integrity protection and encryption, and the data that needs integrity protection and encryption is data in the target data; and
b) a sending unit (1102), configured to send the target message to a network side device, so that the network side device performs service processing on the target message based on the data carried in the unencrypted area in the target message; and
c) wherein the unencrypted area comprises an unprotected area and an integrity protection unencrypted area, the unprotected area is used to carry data that does not need integrity protection and does not need to be encrypted, and the integrity protection unencrypted area is used to carry data that needs integrity protection but does not need to be encrypted.

10. The first device (100) according to claim 9, wherein the determining unit (1101) is specifically configured to:
add the target data to the integrity protection encryption area, add, to the integrity protection unencrypted area, the data that needs integrity protection but does not need to be encrypted in the target data, and add, to the unprotected area, the data that does not need integrity protection and does not need to be encrypted in the target data; or
add the target data to the integrity protection encryption area, and add metadata of the target data to the unencrypted area; or
add, to the integrity protection encryption area, the data that needs integrity protection and needs to be encrypted in the target data, add, to the integrity protection unencrypted area, the data that needs integrity protection but does not need to be encrypted in the target data, and add, to the unprotected area, the data that does not need integrity protection and does not need to be encrypted in the target data.

## Patentansprüche

1. Datensicherheitsschutzverfahren, Folgendes umfassend:
a) Empfangen (203), durch eine netzwerkseitige Vorrichtung (80, 100), einer Zielnachricht, die durch eine erste Vorrichtung (110, 120) gesendet wird, wobei die Zielnachricht verwendet wird, um Zieldaten zu übertragen, die Zieldaten Daten sind, die durch die erste Vorrichtung an eine zweite Vorrichtung übermittelt werden, die Zielnachricht einen unverschlüsselten Bereich und einen Integritätsschutzverschlüsselungsbereich umfasst, der unverschlüsselte Bereich verwendet wird, um Daten zu übertragen, die nicht verschlüsselt werden müssen, die Daten, die nicht verschlüsselt werden müssen, Daten in den Zieldaten oder Daten sind, die sich auf die Zieldaten beziehen, der Integritätsschutzverschlüsselungsbereich verwendet wird, um Daten zu übertragen, die Integritätsschutz und Verschlüsselung benötigen, und die Daten, die Integritätsschutz und Verschlüsselung benötigen, Daten in den Zieldaten sind;
b) Durchführen (204), durch die netzwerkseitige Vorrichtung, einer Dienstverarbeitung an der Zielnachricht basierend auf den Daten, die in dem unverschlüsselten Bereich in der Zielnachricht übertragen werden; und
c) Senden (205), durch die netzwerkseitige Vorrichtung, einer Zielnachricht, die nach der Dienstverarbeitung erhalten wird, an die zweite Vorrichtung; und
d) wobei der unverschlüsselte Bereich einen ungeschützten Bereich und einen unverschlüsselten Integritätsschutzbereich umfasst, der ungeschützte Bereich verwendet wird, um Daten zu übertragen, die keinen Integritätsschutz benötigen und nicht verschlüsselt werden müssen, und der unverschlüsselte Integritätsschutzbereich verwendet wird, um Daten zu übertragen, die Integritätsschutz benötigen, aber nicht verschlüsselt werden müssen.

2. Verfahren nach Anspruch 1, wobei nach dem Durchführen (204), durch die netzwerkseitige Vorrichtung, der Dienstverarbeitung an der Zielnachricht basierend auf den Daten, die in dem unverschlüsselten Bereich in der Zielnachricht übertragen werden, das Verfahren ferner Folgendes umfasst:
Hinzufügen, durch die netzwerkseitige Vorrichtung, eines Verarbeitungsergebnisses des Durchführens der Dienstverarbeitung an der Zielnachricht basierend auf den Daten, die in dem unverschlüsselten Bereich in der Zielnachricht übertragen werden, zu dem ungeschützten Bereich in der Zielnachricht; und
wobei das Senden (205), durch die netzwerkseitige Vorrichtung, einer Zielnachricht, die nach der Dienstverarbeitung erhalten wird, an die zweite Vorrichtung Folgendes umfasst:
Senden, durch die netzwerkseitige Vorrichtung, der Zielnachricht, die das Verarbeitungsergebnis überträgt, an die zweite Vorrichtung.

3. Verfahren nach Anspruch 1 oder 2, wobei das Durchführen (204), durch die netzwerkseitige Vorrichtung, der Dienstverarbeitung an der Zielnachricht basierend auf den Daten, die in dem unverschlüsselten Bereich in der Zielnachricht übertragen werden, Folgendes umfasst:
Erhalten, durch die netzwerkseitige Vorrichtung, der Daten, die in dem unverschlüsselten Bereich übertragen werden; und
Durchführen, durch die netzwerkseitige Vorrichtung, einer Dienstoptimierung an der Zielnachricht basierend auf den Daten, die in dem unverschlüsselten Bereich übertragen werden.

4. Datensicherheitsschutzverfahren, Folgendes umfassend:
a) Bestimmen (201), durch eine erste Vorrichtung (110, 120), einer Zielnachricht, wobei die Zielnachricht verwendet wird, um Zieldaten zu übertragen, die Zieldaten Daten sind, die durch die erste Vorrichtung an eine zweite Vorrichtung übermittelt werden, die Zielnachricht einen unverschlüsselten Bereich und einen Integritätsschutzverschlüsselungsbereich umfasst, der unverschlüsselte Bereich verwendet wird, um Daten zu übertragen, die nicht verschlüsselt werden müssen, die Daten, die nicht verschlüsselt werden müssen, Daten in den Zieldaten oder Daten sind, die sich auf die Zieldaten beziehen, der Integritätsschutzverschlüsselungsbereich verwendet wird, um Daten zu übertragen, die Integritätsschutz und Verschlüsselung benötigen, und die Daten, die Integritätsschutz und Verschlüsselung benötigen, Daten in den Zieldaten sind; und
b) Senden (202), durch die netzwerkseitige Vorrichtung, der Zielnachricht an eine netzwerkseitige Vorrichtung (80, 100), so dass die netzwerkseitige Vorrichtung die Dienstverarbeitung an der Zielnachricht basierend auf den Daten durchführt, die in dem unverschlüsselten Bereich in der Zielnachricht übertragen werden; und
c) wobei der unverschlüsselte Bereich einen ungeschützten Bereich und einen unverschlüsselten Integritätsschutzbereich umfasst, der ungeschützte Bereich verwendet wird, um Daten zu übertragen, die keinen Integritätsschutz benötigen und nicht verschlüsselt werden müssen, und der unverschlüsselte Integritätsschutzbereich verwendet wird, um Daten zu übertragen, die Integritätsschutz benötigen, aber nicht verschlüsselt werden müssen.

5. Verfahren nach Anspruch 4, wobei das Bestimmen, durch eine erste Vorrichtung, einer Zielnachricht Folgendes umfasst:
Hinzufügen, durch die erste Vorrichtung, der Zieldaten zu dem Integritätsschutzverschlüsselungsbereich, Hinzufügen der Daten, die Integritätsschutz benötigen, aber nicht in den Zieldaten verschlüsselt werden müssen, zu dem unverschlüsselten Integritätsschutzbereich, und Hinzufügen der Daten, die keinen Integritätsschutz benötigen und nicht in den Zieldaten verschlüsselt werden müssen, zu dem ungeschützten Bereich; oder
Hinzufügen, durch die erste Vorrichtung, der Zieldaten zu dem Integritätsschutzverschlüsselungsbereich und Hinzufügen von Metadaten der Zieldaten zu dem unverschlüsselten Bereich; oder
Hinzufügen, durch die erste Vorrichtung, der Daten, die Integritätsschutz benötigen und in den Zieldaten verschlüsselt werden müssen, zu dem Integritätsschutzverschlüsselungsbereich, Hinzufügen der Daten, die Integritätsschutz benötigen, aber nicht in den Zieldaten verschlüsselt werden müssen, zu dem unverschlüsselten Integritätsschutzbereich, und Hinzufügen der Daten, die keinen Integritätsschutz benötigen und nicht in den Zieldaten verschlüsselt werden müssen, zu dem ungeschützten Bereich.

6. Netzwerkseitige Vorrichtung (80, 100), Folgendes umfassend:
a) eine Empfangseinheit (801), die konfiguriert ist, um eine Zielnachricht zu empfangen, die durch eine erste Vorrichtung (110, 120) gesendet wird, wobei die Zielnachricht verwendet wird, um Zieldaten zu übertragen, die Zieldaten Daten sind, die durch die erste Vorrichtung an eine zweite Vorrichtung übermittelt werden, die Zielnachricht einen unverschlüsselten Bereich und einen Integritätsschutzverschlüsselungsbereich umfasst, der unverschlüsselte Bereich verwendet wird, um Daten zu übertragen, die nicht verschlüsselt werden müssen, die Daten, die nicht verschlüsselt werden müssen, Daten in den Zieldaten oder Daten sind, die sich auf die Zieldaten beziehen, der Integritätsschutzverschlüsselungsbereich verwendet wird, um Daten zu übertragen, die Integritätsschutz und Verschlüsselung benötigen, und die Daten, die Integritätsschutz und Verschlüsselung benötigen, Daten in den Zieldaten sind;
b) eine Verarbeitungseinheit (802), die konfiguriert ist, um die Dienstverarbeitung an der Zielnachricht basierend auf den Daten durchzuführen, die in dem unverschlüsselten Bereich in der Zielnachricht übertragen werden; und
c) eine Sendeeinheit (803), die konfiguriert ist, um eine Zielnachricht, die nach der Dienstverarbeitung erhalten wird, an die zweite Vorrichtung zu senden; und
d) wobei der unverschlüsselte Bereich einen ungeschützten Bereich und einen unverschlüsselten Integritätsschutzbereich umfasst, der ungeschützte Bereich verwendet wird, um Daten zu übertragen, die keinen Integritätsschutz benötigen und nicht verschlüsselt werden müssen, und der unverschlüsselte Integritätsschutzbereich verwendet wird, um Daten zu übertragen, die Integritätsschutz benötigen, aber nicht verschlüsselt werden müssen.

7. Netzwerkseitige Vorrichtung (80) nach Anspruch 6, wobei die netzwerkseitige Vorrichtung ferner Folgendes umfasst:
eine Trägereinheit (804), die konfiguriert ist, um ein Verarbeitungsergebnis des Durchführens der Dienstverarbeitung an der Zielnachricht basierend auf den Daten, die in dem unverschlüsselten Bereich in der Zielnachricht übertragen werden, zu dem ungeschützten Bereich in der Zielnachricht hinzuzufügen;
wobei die Sendeeinheit (803) speziell konfiguriert ist, um die Zielnachricht, die das Verarbeitungsergebnis überträgt, an die zweite Vorrichtung zu senden.

8. Netzwerkseitige Vorrichtung (80) nach Anspruch 6 oder 7, wobei die Verarbeitungseinheit (802) speziell für Folgendes konfiguriert ist:
Erhalten der Daten, die in dem unverschlüsselten Bereich übertragen werden; und
Durchführen der Dienstoptimierung an der Zielnachricht basierend auf den Daten, die in dem unverschlüsselten Bereich übertragen werden.

9. Erste Vorrichtung (110, 120), Folgendes umfassend:
a) eine Bestimmungseinheit (1101), die konfiguriert ist, um eine Zielnachricht zu bestimmen, wobei die Zielnachricht verwendet wird, um Zieldaten zu übertragen, die Zieldaten Daten sind, die durch die erste Vorrichtung an eine zweite Vorrichtung übermittelt werden, die Zielnachricht einen unverschlüsselten Bereich und einen Integritätsschutzverschlüsselungsbereich umfasst, der unverschlüsselte Bereich verwendet wird, um Daten zu übertragen, die nicht verschlüsselt werden müssen, die Daten, die nicht verschlüsselt werden müssen, Daten in den Zieldaten oder Daten sind, die sich auf die Zieldaten beziehen, der Integritätsschutzverschlüsselungsbereich verwendet wird, um Daten zu übertragen, die Integritätsschutz und Verschlüsselung benötigen, und die Daten, die Integritätsschutz und Verschlüsselung benötigen, Daten in den Zieldaten sind; und
b) eine Sendeeinheit (1102), die konfiguriert ist, um die Zielnachricht an eine netzwerkseitige Vorrichtung zu senden, so dass die netzwerkseitige Vorrichtung die Dienstverarbeitung an der Zielnachricht basierend auf den Daten durchführt, die in dem unverschlüsselten Bereich in der Zielnachricht übertragen werden; und
c) wobei der unverschlüsselte Bereich einen ungeschützten Bereich und einen unverschlüsselten Integritätsschutzbereich umfasst, der ungeschützte Bereich verwendet wird, um Daten zu übertragen, die keinen Integritätsschutz benötigen und nicht verschlüsselt werden müssen, und der unverschlüsselte Integritätsschutzbereich verwendet wird, um Daten zu übertragen, die Integritätsschutz benötigen, aber nicht verschlüsselt werden müssen.

10. Erste Vorrichtung (100) nach Anspruch 9, wobei die Bestimmungseinheit (1101) speziell für Folgendes konfiguriert ist:
Hinzufügen der Zieldaten zu dem Integritätsschutzverschlüsselungsbereich, Hinzufügen der Daten, die Integritätsschutz benötigen, aber nicht in den Zieldaten verschlüsselt werden müssen, zu dem unverschlüsselten Integritätsschutzbereich, und Hinzufügen der Daten, die keinen Integritätsschutz benötigen und nicht in den Zieldaten verschlüsselt werden müssen, zu dem ungeschützten Bereich; oder
Hinzufügen der Zieldaten zu dem Integritätsschutzverschlüsselungsbereich und Hinzufügen von Metadaten der Zieldaten zu dem unverschlüsselten Bereich; oder
Hinzufügen der Daten, die Integritätsschutz benötigen und in den Zieldaten verschlüsselt werden müssen, zu dem Integritätsschutzverschlüsselungsbereich, Hinzufügen der Daten, die Integritätsschutz benötigen, aber nicht in den Zieldaten verschlüsselt werden müssen, zu dem unverschlüsselten Integritätsschutzbereich, und Hinzufügen der Daten, die keinen Integritätsschutz benötigen und nicht in den Zieldaten verschlüsselt werden müssen, zu dem ungeschützten Bereich.

## Revendications

1. Procédé de protection de la sécurité de données, comprenant :
a) la réception (203), par un dispositif côté réseau (80, 100), d'un message cible envoyé par un premier dispositif (110, 120), le message cible étant utilisé pour transporter des données cibles, les données cibles étant des données transmises par le premier dispositif à un second dispositif, le message cible comprenant une zone non chiffrée et une zone de chiffrement de protection de l'intégrité, la zone non chiffrée étant utilisée pour transporter des données qui n'ont pas besoin d'un chiffrement, les données qui n'ont pas besoin d'un chiffrement étant des données dans les données cibles ou des données liées aux données cibles, la zone de chiffrement de protection de l'intégrité étant utilisée pour transporter des données ayant besoin d'une protection d'intégrité et d'un chiffrement, et les données ayant besoin d'une protection de l'intégrité et d'un chiffrement étant des données dans les données cibles ;
b) l'exécution (204), par le dispositif côté réseau, d'un traitement de service sur le message cible en fonction des données transportées dans la zone non chiffrée dans le message cible ; et
c) l'envoi (205), par le dispositif côté réseau au second dispositif, d'un message cible obtenu après le traitement de service ; et
d) la zone non chiffrée comprenant une zone non protégée et une zone non chiffrée de protection de l'intégrité, la zone non protégée étant utilisée pour transporter des données qui n'ont pas besoin de protection de l'intégrité et n'ont pas besoin d'un chiffrement, et la zone non chiffrée de protection de l'intégrité étant utilisée pour transporter des données qui ont besoin de protection d'intégrité, mais n'ont pas besoin d'un chiffrement.

2. Procédé selon la revendication 1, après l'exécution (204), par le dispositif côté réseau, du traitement de service sur le message cible en fonction des données transportées dans la zone non chiffrée dans le message cible, le procédé comprenant en outre :
l'ajout, par le dispositif côté réseau à la zone non protégée dans le message cible, d'un résultat de traitement de l'exécution du traitement de service sur le message cible en fonction des données transportées dans la zone non chiffrée dans le message cible ; et
l'envoi (205), par le dispositif côté réseau au second dispositif, d'un message cible obtenu après le traitement de service comprenant :
l'envoi, par le dispositif côté réseau au second dispositif, du message cible qui transporte le résultat du traitement.

3. Procédé selon la revendication 1 ou 2, l'exécution (204), par le dispositif côté réseau, du traitement de service sur le message cible en fonction des données transportées dans la zone non chiffrée dans le message cible comprenant :
l'obtention, par le dispositif côté réseau, des données transportées dans la zone non chiffrée ; et
l'exécution, par le dispositif côté réseau, d'une optimisation de service sur le message cible en fonction des données transportées dans la zone non chiffrée.

4. Procédé de protection de la sécurité de données, comprenant :
a) la détermination (201), par un premier dispositif (110, 120), d'un message cible, le message cible étant utilisé pour transporter des données cibles, les données cibles étant des données transmises par le premier dispositif à un second dispositif, le message cible comprenant une zone non chiffrée et une zone de chiffrement de protection de l'intégrité, la zone non chiffrée étant utilisée pour transporter des données qui n'ont pas besoin d'un chiffrement, les données qui n'ont pas besoin d'un chiffrement étant des données dans les données cibles ou des données liées aux données cibles, la zone de chiffrement de protection de l'intégrité étant utilisée pour transporter des données qui ont besoin de protection de l'intégrité et d'un chiffrement, et les données qui ont besoin de protection de l'intégrité et d'un chiffrement étant des données dans les données cibles ; et
b) l'envoi (202), par le premier dispositif, du message cible à un dispositif côté réseau (80, 100), de sorte que le dispositif côté réseau exécute un traitement de service sur le message cible en fonction des données transportées dans la zone non chiffrée dans le message cible ; et
c) la zone non chiffrée comprenant une zone non protégée et une zone non chiffrée de protection de l'intégrité, la zone non protégée étant utilisée pour transporter des données qui n'ont pas besoin de protection de l'intégrité et n'ont pas besoin d'un chiffrement, et la zone non chiffrée de protection de l'intégrité étant utilisée pour transporter des données qui ont besoin de protection d'intégrité, mais n'ont pas besoin d'un chiffrement.

5. Procédé selon la revendication 4, la détermination, par un premier dispositif, d'un message cible comprenant :
l'ajout, par le premier dispositif, des données cibles à la zone de chiffrement de protection de l'intégrité, l'ajout, à la zone non chiffrée de protection de l'intégrité, des données qui ont besoin de protection de l'intégrité mais n'ont pas besoin d'un chiffrement dans les données cibles, et l'ajout, à la zone non protégée, des données qui n'ont pas besoin de protection de l'intégrité et n'ont pas besoin d'un chiffrement dans les données cibles ; ou
l'ajout, par le premier dispositif, des données cibles à la zone de chiffrement de protection de l'intégrité, et l'ajout de métadonnées des données cibles à la zone non chiffrée ; ou
l'ajout, par le premier dispositif à la zone de chiffrement de protection de l'intégrité, des données qui ont besoin de protection de l'intégrité et ont besoin d'un chiffrement dans les données cibles, l'ajout, à la zone non chiffrée de protection de l'intégrité, des données qui ont besoin de protection de l'intégrité mais n'ont pas besoin d'un chiffrement dans les données cibles, et l'ajout, à la zone non protégée, des données qui n'ont pas besoin de protection d'intégrité et n'ont pas besoin d'un chiffrement dans les données cibles.

6. Dispositif côté réseau (80, 100), comprenant :
a) une unité de réception (801), configurée pour recevoir un message cible envoyé par un premier dispositif (110, 120), le message cible étant utilisé pour transporter des données cibles, les données cibles étant des données transmises par le premier dispositif à un second dispositif, le message cible comprenant une zone non chiffrée et une zone de chiffrement de protection de l'intégrité, la zone non chiffrée étant utilisée pour transporter des données qui n'ont pas besoin d'un chiffrement, les données qui n'ont pas besoin d'un chiffrement étant des données dans les données cibles ou des données liées aux données cibles, la zone de chiffrement de protection de l'intégrité étant utilisée pour transporter des données qui ont besoin de protection de l'intégrité et d'un chiffrement, et les données qui ont besoin de protection de l'intégrité et d'un chiffrement étant des données dans les données cibles ;
b) une unité de traitement (802), configurée pour exécuter un traitement de service sur le message cible en fonction des données transportées dans la zone non chiffrée dans le message cible ; et
c) une unité d'envoi (803), configurée pour envoyer, au second dispositif, un message cible obtenu après le traitement de service ; et
d) la zone non chiffrée comprenant une zone non protégée et une zone non chiffrée de protection de l'intégrité, la zone non protégée étant utilisée pour transporter des données qui n'ont pas besoin de protection de l'intégrité et n'ont pas besoin d'un chiffrement, et la zone non chiffrée de protection de l'intégrité étant utilisée pour transporter des données qui ont besoin de protection d'intégrité, mais n'ont pas besoin d'un chiffrement.

7. Dispositif côté réseau (80) selon la revendication 6, le dispositif côté réseau comprenant en outre :
une unité de palier (804), configurée pour ajouter, à la zone non protégée dans le message cible, un résultat de traitement de l'exécution du traitement de service sur le message cible en fonction des données transportées dans la zone non chiffrée dans le message cible ;
l'unité d'envoi (803) étant spécifiquement configurée pour envoyer, au second dispositif, le message cible qui transporte le résultat du traitement.

8. Dispositif côté réseau (80) selon la revendication 6 ou 7, l'unité de traitement (802) étant spécifiquement configurée pour :
obtenir les données transportées dans la zone non chiffrée ; et
exécuter une optimisation de service sur le message cible en fonction des données transportées dans la zone non chiffrée.

9. Premier dispositif (110, 120), comprenant :
a) une unité de détermination (1101), configurée pour déterminer un message cible, le message cible étant utilisé pour transporter des données cibles, les données cibles étant des données transmises par le premier dispositif à un second dispositif, le message cible comprenant une zone non chiffrée et une zone de chiffrement de protection de l'intégrité, la zone non chiffrée étant utilisée pour transporter des données qui n'ont pas besoin d'un chiffrement, les données qui n'ont pas besoin d'un chiffrement étant des données dans les données cibles ou des données liées aux données cibles, la zone de chiffrement de protection de l'intégrité étant utilisée pour transporter des données ayant besoin d'une protection d'intégrité et d'un chiffrement, et les données ayant besoin d'une protection d'intégrité et d'un chiffrement étant des données dans les données cibles ; et
b) une unité d'envoi (1102), configurée pour envoyer le message cible à un dispositif côté réseau, de sorte que le dispositif côté réseau exécute un traitement de service sur le message cible en fonction des données transportées dans la zone non chiffrée dans le message cible ; et
c) la zone non chiffrée comprenant une zone non protégée et une zone non chiffrée de protection de l'intégrité, la zone non protégée étant utilisée pour transporter des données qui n'ont pas besoin de protection de l'intégrité et n'ont pas besoin d'un chiffrement, et la zone non chiffrée de protection de l'intégrité étant utilisée pour transporter des données qui ont besoin de protection d'intégrité, mais n'ont pas besoin d'un chiffrement.

10. Premier dispositif (100) selon la revendication 9, l'unité de détermination (1101) étant spécifiquement configurée pour :
ajouter les données cibles à la zone de chiffrement de protection de l'intégrité, ajouter, à la zone non chiffrée de protection de l'intégrité, les données qui ont besoin de protection de l'intégrité mais n'ont pas besoin d'un chiffrement dans les données cibles, et ajouter, à la zone non protégée, les données qui n'ont pas besoin de protection de l'intégrité et n'ont pas besoin d'un chiffrement dans les données cibles ; ou
ajouter les données cibles à la zone de chiffrement de protection de l'intégrité et ajouter des métadonnées des données cibles à la zone non chiffrée ; ou
ajouter, à la zone de chiffrement de protection de l'intégrité, les données qui ont besoin de protection de l'intégrité et ont besoin d'un chiffrement dans les données cibles, ajouter, à la zone non chiffrée de protection de l'intégrité, les données qui ont besoin de protection de l'intégrité mais n'ont pas besoin d'un chiffrement dans les données cibles, et ajouter, à la zone non protégée, les données qui n'ont pas besoin de protection de l'intégrité et n'ont pas besoin d'un chiffrement dans les données cibles.
